# EUROPÄISCHE PATENTSCHRIFT

(11) **EP 3 938 684 B1**
(45) Veröffentlichungstag und Bekanntmachung des Hinweises auf die Patenterteilung: **15.02.2023**
(21) Anmeldenummer: 20708453.4
(22) Anmeldetag: 25.02.2020
(51) Int. Cl.: B63H 23/32, F16J 15/32, F16J 15/34, F16J 15/40, F16J 15/3204

(54) **MARINE-GLEITRINGDICHTUNGSANORDNUNG**
MARINE SLIDE RING SEAL ARRANGEMENT
AGENCEMENT MARIN DE JOINTS D'ÉTANCHÉITÉ À BAGUE DE GLISSEMENT

(30) Priorität: 14.03.2019 DE 102019203454
(43) Veröffentlichungstag der Anmeldung: 19.01.2022
(73) Patentinhaber: EagleBurgmann Germany GmbH & Co. KG, 82515 Wolfratshausen (DE)
(72) Erfinder: PFEIL, Dieter, 82549 Königsdorf (DE); BINDER, Jürgen, 82377 Penzberg (DE)
(74) Vertreter: Hoefer & Partner Patentanwälte mbB
(86) Internationale Anmeldenummer: PCT/EP2020/054855
(87) Internationale Veröffentlichungsnummer: WO 2020/182459

(56) Entgegenhaltungen:
- EP-A1- 3 438 511
- EP-A1- 3 438 511
- EP-A2- 2 687 762
- EP-A2- 2 687 762
- DE-A1-102016 203 230
- DE-A1-102016 203 230
- US-A- 4 483 540
- US-A- 4 483 540
- US-A1- 2007 147 988
- US-A1- 2007 147 988
- US-A1- 2017 335 966
- US-A1- 2017 335 966

## Beschreibung

Die Erfindung betrifft eine Marine-Gleitringdichtungsanordnung sowie eine Marine-Fahrzeug, z.B. Schiffe, Bohrinseln etc., mit einer derartigen Gleitringdichtungsanordnung. Ferner betrifft die Erfindung einen Marineantrieb mit einer erfindungsgemäßen Marine-Gleitringdichtungsanordnung.

Bei Marineanwendungen ist ein Problemkreis die Aggressivität des Salzwassers. Ein weiterer Problemkreis ist hierbei die Gewässer-Verschmutzung. Bei Schiffsantrieben oder dergleichen müssen hierbei insbesondere die Lager, welche üblicherweise ölgefüllt sind, gegen das Meerwasser abgedichtet werden. Aufgrund ständig sich verschärfender Umweltvorschriften sind an derartige Abdichtungen von Antriebswellen oder Lagern oder dergleichen höchste Anforderungen zu stellen.

US 4483540 offenbart eine Marine-Gleitringdichtungsanordnung gemäß dem Oberbegriff des Anspruchs 1.

Es ist daher Aufgabe der vorliegenden Erfindung, eine Marine-Gleitringdichtungsanordnung und einen Marineantrieb bereitzustellen, welche bei einfachem Aufbau und einfacher, kostengünstiger Herstellbarkeit eine Leckage von Öl in die Umgebung mit höchster Sicherheit verhindern kann und insbesondere auch bei einer Beschädigung oder einem Ausfall der Dichtung kein Öl in das umgebende Wasser entlässt.

Diese Aufgabe wird durch eine Marine-Gleitringdichtungsanordnung mit den Merkmalen des Anspruchs 1 und einen Marineantrieb mit den Merkmalen des Anspruchs 12 gelöst. Die Unteransprüche zeigen bevorzugte Weiterbildungen der Erfindung.

Die erfindungsgemäße Marine-Gleitringdichtungsanordnung mit den Merkmalen des Anspruchs 1 weist den Vorteil auf, dass eine Leckage eines Öls oder Schmiermittels eines Antriebs in das die Gleitringdichtungsanordnung umgebende Wasser verhindert werden kann. Ferner kann auch bei einem Ausfall bzw. Stillstand des Antriebs eine sichere Abdichtung gewährleistet werden. Dies wird erfindungsgemäß dadurch erreicht, dass die Marine-Gleitringdichtungsanordnung eine erste und eine zweite Gleitringdichtung aufweist. Die beiden Gleitringdichtungen sind in Reihe an einer abzudichtenden Welle angeordnet. Die erste Gleitringdichtungsanordnung umfasst einen ersten rotierenden Gleitring und einen zweiten stationären Gleitring, welche zwischen ihren beiden Gleitflächen einen ersten Dichtspalt definieren. Die zweite Gleitringdichtung umfasst einen zweiten rotierenden Gleitring und einen zweiten stationären Gleitring, welche zwischen ihren Gleitflächen einen zweiten Dichtspalt definieren. Ferner umfasst die Marine-Gleitringdichtungsanordnung einen Sperrfluidkreislauf mit einem Sperrfluidraum und einem Spülfluid bzw. Sperrfluid. Der Sperrfluidkreislauf dient auch zum Spülen an den Gleitringdichtungen. Der Sperrfluidraum ist dabei zwischen den in Reihe geschalteten ersten und zweiten Gleitringdichtungen angeordnet und mit dem Sperrfluid gefüllt. Das Sperrfluid ist ein umweltverträgliches Fluid, beispielsweise ein Glykol enthaltendes Fluid. Der Sperrfluidraum zwischen der ersten und zweiten Gleitringdichtungsanordnung ist in einen ersten und einen zweiten Unterraum unterteilt, wobei die Unterteilung mittels einer flexiblen Lippendichtung ausgeführt ist. Hierbei ist der zweite Unterraum an der zweiten Gleitringdichtung angeordnet. Die Lippendichtung ist dabei derart angeordnet, dass eine Strömung von Sperrfluid vom ersten Unterraum in den zweiten Unterraum möglich ist, jedoch eine Strömung von Sperrfluid vom zweiten Unterraum in den ersten Unterraum verhindert ist. Die Lippendichtung öffnet somit nur in eine Strömungsrichtung und bleibt in der anderen Strömungsrichtung, auch bei großen Druckunterschieden zwischen dem ersten und zweiten Unterraum geschlossen.

Da das Sperrfluid im Sperrfluidraum vorhanden ist, welcher zwischen der ersten und zweiten Gleitringdichtung und somit zwischen der mit Wasser umgebenden Außenseite und einem das Wasser möglicherweise verunreinigenden Öl oder dergleichen als Schmierstoff angeordnet ist, ist im normalen Betrieb, bei dem das Sperrfluid im Sperrkreislauf umgewälzt wird, ein Druck im Sperrfluidraum höher als der Außendruck des Wassers und höher als der Druck des Schmiermittels an der zweiten Gleitringdichtung. Dadurch kann im normalen Betrieb eine minimale Leckage des Sperrfluids in das Wasser auftreten, welche jedoch dann akzeptabel ist, wenn als Sperrfluid ein umweltverträgliches Fluid verwendet wird. Ferner kann im normalen Betrieb auch eine minimale Leckage von Sperrfluid in den Schmierstoffbereich auftreten, wobei dies ebenfalls unkritisch ist, da die geringe Menge an Sperrfluid im Schmierstoff die Schmiereigenschaften des Schmierstoffs nicht beeinträchtigt. Auch bei einem Stillstand der Antriebswelle ist eine sichere Abdichtung durch die erste und zweite Gleitringdichtung gewährleistet.

Besonders bevorzugt weist die erste Gleitringdichtung einen ersten Gleitringträger auf, welcher mittels eines ersten Vorspannelements in Axialrichtung vorgespannt ist und wobei der erste Gleitringträger axial beweglich angeordnet ist. Dadurch kann bei Axialbewegungen der Welle, welche im Betrieb auftreten können, ein unmittelbares Nachsetzen der ersten Gleitringdichtung in Axialrichtung ermöglicht werden, so dass hier keine übermäßige Leckage bei axialen Wellenbewegungen auftritt.

Vorzugsweise hält der erste Gleitringträger dabei den rotierenden Gleitring.

Weiter bevorzugt weist die Gleitringdichtung einen zweiten Gleitringträger auf, welcher mittels eines zweiten Vorspannelements axial vorgespannt ist und in Axialrichtung der Gleitringdichtung axial beweglich angeordnet ist. Durch diesen beweglichen zweiten Gleitringträger kann die zweite Gleitringdichtung ebenfalls ohne Probleme axialen Wellenbewegungen im Betrieb folgen. Der zweite Gleitringträger ist vorzugsweise am stationären Gleitring angeordnet und hält diesen.

Gemäß einer weiteren bevorzugten Ausgestaltung der vorliegenden Erfindung umfasst die Marine-Gleitringdichtungsanordnung einen dritten Gleitringträger, welcher den zweiten rotierenden Gleitring der zweiten Gleitringdichtung hält. Dabei dichtet die Lippendichtung am dritten Gleitringträger ab. Hierdurch kann ein besonders kompakter und einfacher Aufbau realisiert werden.

Der dritte Gleitringträger weist vorzugsweise eine radial nach außen gerichtete Fläche auf, an welcher die Lippendichtung abdichtet. Die radial nach außen gerichtete Fläche ist vorzugsweise parallel zu einer Mittelachse der Marine-Gleitringdichtungsanordnung. Besonders bevorzugt ist die Kontaktfläche, an welcher die Lippendichtung abdichtet, mit einer harten Schicht beschichtet. Die harte Schicht umfasst vorzugsweise Chrom.

Gemäß einer besonders bevorzugten Ausgestaltung der Erfindung ist am ersten Gleitringträger ein erstes Nebendichtelement angeordnet. Das erste Nebendichtelement ist vorzugsweise ein O-Ring. Das erste Nebendichtelement weist dabei einen ersten axialen Verformungsraum unmittelbar benachbart zum ersten Nebendichtelement auf. Durch diesen ersten axialen Verformungsraum unmittelbar benachbart zum ersten Nebendichtelement kann eine Druckumkehr geeignete Gleitringdichtung bereitgestellt werden. Somit kann eine Umkehr der Druckverhältnisse an der Gleitringdichtung, bei der beispielsweise ein Außendruck des Wassers größer wird als ein Druck im Sperrfluidraum den Abdichtungseigenschaften der Marine-Gleitringdichtungsanordnung nichts anhaben. Eine derartige Druckumkehr bei derartigen Marine-Anwendungen kann beispielsweise beim Beladen eines Schiffes erfolgen, wenn der Antrieb des Schiffes aufgrund der Beladung tiefer in das Wasser eintaucht. Bei einer derartigen Druckumkehr kann jedoch aufgrund des ersten axialen Verformungsraums auch bei ansteigendem Außenwasserdruck eine unmittelbare Verformung des ersten Nebendichtelements ermöglicht werden und somit ein sofortiges Nachrücken und Schließen des Dichtspalts an der ersten Gleitringdichtung sichergestellt werden.

Um auch die zweite Gleitringdichtung druckumkehrgeeignet auszubilden, ist am zweiten Gleitringträger ein zweites Nebendichtelement, insbesondere ein O-Ring, angeordnet, wobei ein zweiter axialer Verformungsraum unmittelbar benachbart zum zweiten Nebendichtelement vorgesehen ist. Auch hierdurch kann die zweite Gleitringdichtung bei einer Druckumkehr, wenn ein Druck im Sperrfluidraum unter einen Druck des abzudichtenden Schmiermediums sinkt, sicher abdichten. Ein derartiger Fall kann beispielsweise auftreten, wenn ein Leck im Sperrfluidkreislauf zur Außenseite (Wasser) auftritt oder wenn die erste Gleitringdichtung versagt und der Druck im Sperrfluidraum dann auf den Druck des Wassers an der Außenseite absinkt, beispielsweise bei einer Beschädigung der Gleitflächen der ersten Gleitringdichtung.

Der Sperrkreislauf umfasst vorzugsweise ein Sperrfluidreservoir und eine Pumpe, wobei der zweite Unterraum des Sperrfluidraums über eine Rückleitung mit dem Sperrfluidreservoir verbunden ist und wobei das Sperrfluidreservoir über eine Zuleitung mit dem ersten Unterraum des Sperrfluidraums verbunden ist. Die Pumpe ist vorzugsweise in der Zuleitung zwischen dem Sperrfluidreservoir und dem ersten Unterraum angeordnet.

Weiter bevorzugt ist die Lippendichtung mittels eines Fixierrings und einer Vielzahl von Fixiermitteln, beispielsweise Schrauben, an einem Gehäuse der Marine-Gleitringdichtungsanordnung befestigt. Hierdurch kann ein Grundkörper der Lippendichtung zwischen dem Fixierring und dem Gehäuse geklemmt werden.

Weiter bevorzugt umfasst der Sperrkreislauf ferner einen Wasserabscheider und/oder einen Schmiermediumabscheider. Der Wasserabscheider kann dabei Wasser, welches über den ersten Dichtspalt in den Sperrfluidraum eingedrungen ist, abscheiden. Der Schmiermediumabscheider kann ein Schmiermedium, welches über den zweiten Dichtspalt in den Sperrfluidraum eingedrungen ist, abscheiden.

Besonders bevorzugt ist der Sperrkreislauf derart ausgelegt, dass die Pumpe nicht konstant betrieben wird, sondern eine Umwälzung in vorbestimmten Zeitintervallen vorgenommen wird.

Ferner betrifft die vorliegende Erfindung einen Marine-Antrieb, beispielsweise ein Strahlruder oder einen Propeller für Schiffe oder Bohrinseln oder Propellergondeln oder dergleichen. Ein bevorzugtes Anwendungsgebiet sind beispielsweise Tiefsee-Bohrinseln, welche nicht mehr fest am Meeresboden verankert werden, sondern mittels mehrerer Antriebe auf Position gehalten werden.

Es sei angemerkt, dass die erfindungsgemäßen Marine-Gleitringdichtungsanordnungen nicht nur im Meerwasser, sondern selbstverständlich auch im Süßwasser zur Abdichtung an Wellen von Schiffsantrieben oder dergleichen eingesetzt werden können.

Nachfolgend wird unter Bezugnahme auf die begleitende Zeichnung ein Ausführungsbeispiel einer Marine-Gleitringdichtungsanordnung und eines Marine-Antriebs gemäß einem bevorzugten Ausführungsbeispiel der Erfindung im Detail beschrieben.

In der Zeichnung zeigt:
- Fig. 1: eine schematische Ansicht eines Schiffsantriebs, und
- Fig. 2: eine schematische Schnittansicht der Marine-Gleitringdichtungsanordnung von Fig. 1.

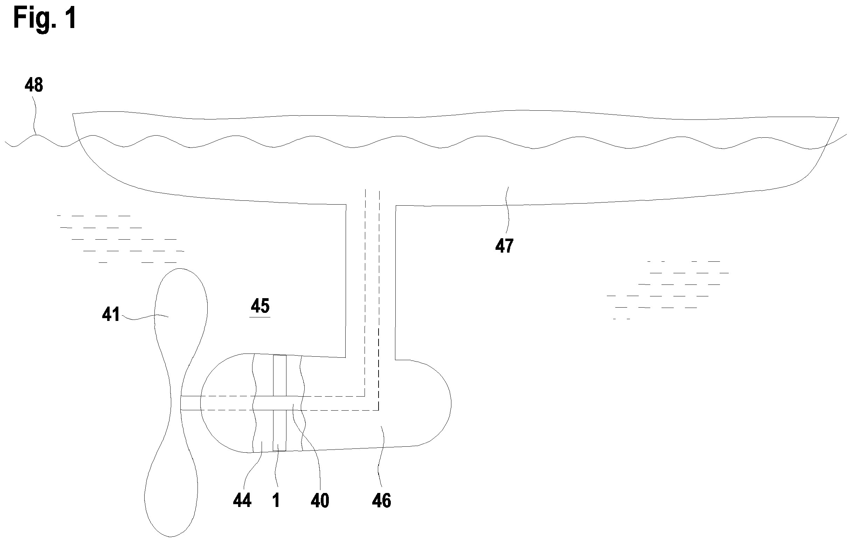

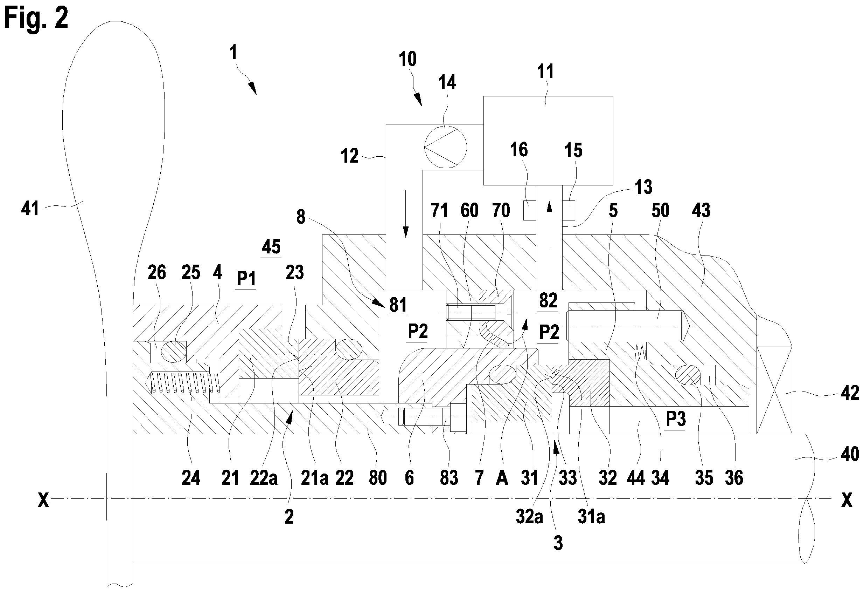

Nachfolgend wird unter Bezugnahme auf die Fig. 1 und 2 eine Marine-Gleitringdichtungsanordnung 1 gemäß einem bevorzugten Ausführungsbeispiel der Erfindung im Detail beschrieben.

Fig. 1 zeigt schematisch die Verwendung der Marine-Gleitringdichtungsanordnung 1 an einer Propellergondel 46 eines Schiffsantriebs.

Die Marine-Gleitringdichtungsanordnung 1 dichtet dabei an einer Antriebswelle 40 ab. Die Antriebswelle 40 treibt einen Propeller 41 eines Schiffs 47 an. Die Propellergondel 46 ist am Schiffskörper in üblicher Weise an dessen Unterseite angeordnet. Das Bezugszeichen 48 bezeichnet eine Wasserlinie.

Die Gleitringdichtungsanordnung 1 muss somit einen mit einem Schmiermedium gefüllten Raum 44 von der Wasserumgebung 45 abdichten.

Fig. 2 zeigt die Marine-Gleitringdichtungsanordnung 1 im Detail. Wie aus Fig. 2 ersichtlich ist, dichtet die Marine-Gleitringdichtungsanordnung 1 zwischen der Wasserumgebung 45 und dem mit Schmiermedium gefüllten Raum 44 an einem Lager 42 ab. Das Lager 42 lagert dabei die Antriebswelle 40 für den Propeller 41. Dabei liegt die Marine-Gleitringdichtungsanordnung 1 zwischen der Antriebswelle 40 und einem Gehäuse 43.

Die Marine-Gleitringdichtung 1 umfasst eine erste Gleitringdichtung 2 und eine zweite Gleitringdichtung 3. Die beiden Gleitringdichtungen 2, 3 sind in Reihe an der Antriebswelle 40 geordnet, wobei zwischen den beiden Gleitringdichtungen in Axialrichtung X-X ein Sperrfluidraum 8 vorhanden ist.

Die erste Gleitringdichtung 2 umfasst einen ersten rotierenden Gleitring 21 und einen ersten stationären Gleitring 22, welche zwischen ihren Gleitflächen 21a und 22a einen ersten Dichtspalt 23 definieren.

Weiterhin umfasst die zweite Gleitringdichtung 3 einen zweiten rotierenden Gleitring 31 und einen zweiten stationären Gleitring 32, welche zwischen ihren Gleitflächen 31a und 32a einen zweiten Dichtspalt 33 definieren.

Die erste Gleitringdichtung 2 umfasst ferner eine erste Vorspanneinrichtung 24, welche eine Vielzahl von Federelementen umfasst, die in Umfangsrichtung angeordnet sind. Der erste rotierende Gleitring 21 wird mittels eines ersten Gleitringträgers 4 gehalten. Der erste Gleitringträger 4 ist über eine Hülse 80 mit der Antriebswelle 40 verbunden. Zwischen dem ersten Gleitringträger 4 und der Hülse 80 ist eine erste Nebendichtung 25 in Form eines O-Rings vorgesehen.

Wie aus Fig. 2 ersichtlich ist, ist unmittelbar benachbart zur ersten Nebendichtung 25 ein erster axialer Verformungsraum 26 vorgesehen. Dieser erste axiale Verformungsraum 26 dient dazu, bei einer Axialbewegung der Antriebswelle 4 ein unmittelbares axiales Nachrücken der ersten Gleitringdichtung 2 durch Verformung und Bewegung der ersten Nebendichtung 25 in den ersten axialen Verformungsraum 26 hinein, zu ermöglichen.

Der erste stationäre Gleitring 22 ist mit dem Gehäuse 43 verbunden und drehfest an diesem angeordnet.

Die zweite Gleitringdichtung 3 umfasst ferner eine zweite Vorspanneinrichtung 34, welche ebenfalls eine Vielzahl von Federelementen umfasst, die in Umfangsrichtung angeordnet sind. Wie aus Fig. 2 ersichtlich ist, ist eine zweite Nebendichtung 35 zur Abdichtung zwischen dem zweiten Gleitringträger 5 und dem Gehäuse 43 angeordnet. Der zweite Gleitringträger 5 ist hierbei über mehrere Stifte 50 axial beweglich angeordnet. Hierbei ist zwischen den Stiften 50 und dem zweiten Gleitringträger 5 eine Spielpassung vorgesehen.

Durch einen zweiten axialen Verformungsraum 36 an der zweiten Nebendichtung 35 kann die zweite Gleitringdichtung 3 ebenfalls problemlos Axialbewegungen der Antriebswelle 44 durch Verformung und Bewegung der zweiten Nebendichtung 35 in den zweiten axialen Verformungsraum 36 folgen.

Somit sind die erste Gleitringdichtung 2 und die zweite Gleitringdichtung 3 druckumkehrgeeignet.

Wie weiter aus Fig. 2 ersichtlich ist, ist der Sperrfluidraum 8 zwischen der ersten und zweiten Gleitringdichtung 2, 3 durch eine Lippendichtung 7 in einen ersten Unterraum 81 und einen zweiten Unterraum 82 unterteilt. Der erste und zweite Unterraum 81, 82 sind Teil eines Spül- bzw. Sperrkreislaufs 10, welcher ferner noch ein Reservoir 11 und eine Pumpe 14 umfasst. Als Sperrmedium wird hierbei ein umweltverträgliches Medium verwendet.

Wie aus Fig. 2 ersichtlich ist, ist das Reservoir 11 über eine Zuleitung 12 mit dem ersten Unterraum 81 des Sperrfluidraums 8 verbunden. Der zweite Unterraum 82 ist über eine Rückleitung 13 mit dem Reservoir 11 verbunden.

Schematisch sind in Fig. 2 noch ein Ölabscheider 15 und ein Wasserabscheider 16 dargestellt.

Die Lippendichtung 7 ist mittels eines Fixierrings 70 und mehrerer Fixierelemente 71 in Form von Schrauben am Gehäuse 43 fixiert. Hierbei ist die Lippendichtung 7 derart angeordnet, dass die Dichtlippe eine Strömung vom ersten Unterraum 81 zum zweiten Unterraum 82 zulässt. Dies ist in Fig. 2 durch den Pfeil A angedeutet. Die Dichtlippe der Lippendichtung 7 dichtet dabei auf einer radial nach außen gerichteten Fläche 60 an einem dritten Gleitringträger 6 ab. Der dritte Gleitringträger 6 ist ferner mittels einer Vielzahl von Schrauben 83 an der mit der Antriebswelle 40 mitdrehenden Hülse 80 fixiert. Der dritte Gleitringträger 6 hält dabei den zweiten rotierenden Gleitring 31, wie in Fig. 2 gezeigt.

Somit kann ein besonders kompakter Aufbau erreicht werden.

Im normalen Betrieb, in dem die Pumpe 14 betrieben wird, herrscht in der Umgebung 45, d.h. im Wasser, ein erster Druck P1. Im Sperrfluidraum 8 herrscht ein zweiter Druck P2 und im mit Schmiermedium gefüllten Raum 44 herrscht ein dritter Druck P3. Dabei ist der zweite Druck P2 im Normalbetrieb aufgrund der Druckerhöhung durch die Pumpe 14 größer als der erste Druck P1 im Wasser und der dritte Druck P3 im Raum 44. Somit kann im normalen Betrieb eine minimale Leckage vom ersten Unterraum 81 über den ersten Dichtspalt 23 zur Umgebung 45 auftreten und ebenfalls eine minimale Leckage vom zweiten Unterraum 82 über den zweiten Dichtspalt 33 in den Raum 44 auftreten. Die Pumpe 14 des Sperrkreislaufs 10 muss dabei nicht konstant betrieben werden, sondern kann in Intervallen für eine Druckerhöhung sorgen. Dabei steigt der Druck zuerst im ersten Unterraum 81 über den Druck im zweiten Unterraum 82 an, wodurch dann die Lippendichtung 7 öffnet, so dass ein Druckgleichgewicht zwischen dem ersten Unterraum 81 und dem zweiten Unterraum 82 hergestellt wird.

Bei einer Störung oder Beschädigung von Teilen der Marine-Gleitringdichtungsanordnung 1 kann erfindungsgemäß in jeder Situation eine sichere Abdichtung des Schmiermediums im Raum 44 von der Umgebung 45 sichergestellt werden.

Fig. 2 zeigt den Zustand der Marine-Gleitringdichtungsanordnung 1, wenn die Pumpe 14 nicht betrieben wird. Dann ist der zweite Druck P2 kleiner als der erste Druck P1 und kleiner als der dritte Druck P3. Sollte beispielsweise die zweite Gleitringdichtung 3 beschädigt sein, könnte Schmiermedium aus dem Raum 44 über einen offenen zweiten Dichtspalt 33 in den zweiten Unterraum 82 gelangen, da der zweite Druck P2 kleiner als der dritte Druck P3 ist. Da die Lippendichtung 7 nur eine Strömung vom ersten Unterraum 81 in Richtung zum zweiten Unterraum 82 zulässt, kann das sich im zweiten Unterraum 82 befindliche Schmiermedium nicht zum ersten Unterraum 81 bewegen. Falls das Schmiermedium weiter in Richtung zum Reservoir 11 diffundiert, würde es durch den Ölabscheider 15 aus dem Sperrmedium entfernt werden. Gegebenenfalls würde sich das Schmiermedium auch im Reservoir 11 sammeln, wobei dann beispielsweise durch Sensoren zur Erfassung des Schmiermediums sichergestellt werden kann, dass die Pumpe 14 nicht mehr betrieben wird.

Wenn andererseits beispielsweise die erste Gleitringdichtung 2 beschädigt wäre und der zweite Druck P2 kleiner ist als der erste Druck P1, könnte Wasser aus der Umgebung 45 in den ersten Unterraum 81 gelangen. Bei entsprechenden Druckverhältnissen, z.B. durch Wiederbetreiben der Pumpe 14, könnte hier die Lippendichtung 7 öffnen, so dass das Wasser weiter in den zweiten Unterraum 82 strömen kann. Da die zweite Gleitringdichtung 3 noch funktionsfähig ist, würde die zweite Gleitringdichtung 3 verhindern, dass das Wasser in den Raum 44 für das Schmiermedium gelangt. Das Wasser würde dann über den Wasserabscheider 16 aus dem Sperrmedium entfernt werden können.

Im normalen Betrieb bei angetriebener Pumpe 14 hat die Lippendichtung 7 ferner neben der Abdichtungsfunktion als Sicherheitsdichtung noch die Funktion einer Drossel für das Sperrfluid zwischen dem ersten Unterraum 81 und dem zweiten Unterraum 82.

Neben der vorstehenden schriftlichen Beschreibung der Erfindung wird zu deren ergänzender Offenbarung hiermit explizit auf die zeichnerische Darstellung der Erfindung in den Fig. 1 und 2 Bezug genommen.

### Bezugszeichenliste

- 1: Marine-Gleitringdichtungsanordnung
- 2: erste Gleitringdichtung
- 3: zweite Gleitringdichtung
- 4: erster Gleitringträger
- 5: zweiter Gleitringträger
- 6: dritter Gleitringträger
- 7: Lippendichtung
- 8: Sperrfluidraum
- 10: Sperrkreislauf
- 11: Reservoir
- 12: Zuleitung
- 13: Rückleitung
- 14: Pumpe
- 15: Ölabscheider
- 16: Wasserabscheider
- 21: erster rotierender Gleitring
- 21a: Gleitfläche des ersten rotierenden Gleitrings
- 22: erster stationärer Gleitring
- 22a: Gleitfläche des ersten stationären Gleitrings
- 23: erster Dichtspalt
- 24: erste Vorspanneinrichtung
- 25: erste Nebendichtung
- 26: erster axialer Verformungsraum
- 31: zweiter rotierender Gleitring
- 31a: Gleitfläche des zweiten rotierenden Gleitrings
- 32: zweiter stationärer Gleitring
- 32a: Gleitfläche des zweiten stationären Gleitrings
- 33: zweiter Dichtspalt
- 34: zweite Vorspanneinrichtung
- 35: zweite Nebendichtung
- 36: zweiter axialer Verformungsraum
- 40: Antriebswelle
- 41: Propeller
- 42: Lager
- 43: Gehäuse
- 44: Raum für Schmiermedium
- 45: Umgebung / Seewasser
- 46: Gondel
- 47: Schiff
- 48: Wasserlinie
- 50: Stift
- 60: radial nach außen gerichtete Abdichtfläche für Lippendichtung
- 70: Fixierring
- 71: Schraube / Fixierelement
- 80: Hülse
- 81: erster Unterraum
- 82: zweiter Unterraum
- 83: Schrauben

- A: Öffnungsrichtung der Lippendichtung
- X-X: Axialrichtung der Gleitringdichtungsanordnung

- P1: Druck der Umgebung
- P2: Druck im Sperrfluidraum
- P3: Druck im Schmiermediumraum

## Patentansprüche

1. Marine-Gleitringdichtungsanordnung, umfassend:
• eine erste Gleitringdichtung (2) mit einem ersten rotierenden Gleitring (21) und einem ersten stationären Gleitring (22), welche zwischen ihren beiden Gleitflächen (21a, 22a) einen ersten Dichtspalt (23) definieren,
• eine zweite Gleitringdichtung (3) mit einem zweiten rotierenden Gleitring (31) und einem zweiten stationären Gleitring (32), welche zwischen ihren Gleitflächen (31a, 32a) einen zweiten Dichtspalt (33) definieren, **gekennzeichnet durch**
• einen Sperrkreislauf (10) mit einem Sperrfluidraum (8), welcher zwischen der ersten Gleitringdichtung (2) und der zweiten Gleitringdichtung (3) angeordnet ist und mit einem Sperrfluid gefüllt ist,
• wobei der Sperrfluidraum (8) in einen ersten Unterraum (81) und einen zweiten Unterraum (82) unterteilt ist,
• wobei der erste Unterraum (81) und der zweite Unterraum (82) durch eine flexible Lippendichtung (7) getrennt sind,
• wobei der zweite Unterraum (82) an der zweiten Gleitringdichtung (3) angeordnet ist, und
• wobei die Lippendichtung (7) derart angeordnet ist, dass eine Strömung von Sperrfluid vom ersten Unterraum (81) in den zweiten Unterraum (82) möglich ist und eine Strömung von Sperrfluid vom zweiten Unterraum zum ersten Unterraum verhindert ist.

2. Marine-Gleitringdichtungsanordnung nach Anspruch 1, wobei die erste Gleitringdichtung (2) einen ersten Gleitringträger (4) aufweist, welcher mittels einer ersten Vorspanneinrichtung (24) axial vorgespannt ist und welcher in Axialrichtung (X-X) axial beweglich angeordnet ist.

3. Marine-Gleitringdichtungsanordnung nach Anspruch 2, wobei der erste Gleitringträger (4) den ersten rotierenden Gleitring (21) hält.

4. Marine-Gleitringdichtungsanordnung nach einem der vorhergehenden Ansprüche, wobei die zweite Gleitringdichtung (3) einen zweiten Gleitringträger (5) aufweist, welcher mittels einer zweiten Vorspanneinrichtung (34) axial vorgespannt ist und welcher in Axialrichtung (X-X) axial beweglich angeordnet ist.

5. Marine-Gleitringdichtungsanordnung nach Anspruch 4, wobei der zweite Gleitringträger (5) den zweiten stationären Gleitring (32) hält.

6. Marine-Gleitringdichtungsanordnung nach einem der vorhergehenden Ansprüche, ferner umfassend einen dritten Gleitringträger (6), welcher den zweiten rotierenden Gleitring (32) der zweiten Gleitringdichtung (3) hält, wobei die Lippendichtung (7) am dritten Gleitringträger (6) abdichtet.

7. Marine-Gleitringdichtungsanordnung nach Anspruch 6, wobei der dritte Gleitringträger (6) eine radial nach außen gerichtete Fläche (60) aufweist, an welcher die Lippendichtung (7) abdichtet.

8. Marine-Gleitringdichtungsanordnung nach einem der vorhergehenden Ansprüche, wobei am ersten Gleitringträger (4) ein erstes Nebendichtelement (25) angeordnet ist, wobei ein erster axialer Verformungsraum (26) unmittelbar benachbart zum ersten Nebendichtelement (25) vorgesehen ist.

9. Marine-Gleitringdichtungsanordnung nach einem der vorhergehenden Ansprüche, wobei am zweiten Gleitringträger (5) ein zweites Nebendichtelement (35) angeordnet ist, wobei ein zweiter axialer Verformungsraum (36) unmittelbar benachbart zum zweiten Nebendichtelement (35) vorgesehen ist.

10. Marine-Gleitringdichtungsanordnung nach einem der vorhergehenden Ansprüche, wobei der Sperrkreislauf (10) ein Sperrfluid-Reservoir (11) und eine Pumpe (14) aufweist, wobei der zweite Unterraum (82) über eine Rückleitung (13) mit dem Sperrfluid-Reservoir (11) verbunden ist, um Sperrfluid aus dem zweiten Unterraum (82) zum Sperrfluid-Reservoir zurückzuführen, und wobei das Sperrfluid-Reservoir (11) über eine Zuleitung (12) mit dem ersten Unterraum (81) verbunden ist, um Sperrfluid vom Sperrfluid-Reservoir (11) zum ersten Unterraum (81) zuzuführen.

11. Marine-Gleitringdichtungsanordnung nach Anspruch 10, ferner umfassend einen Ölabscheider (15) und/oder einen Wasserabscheider (16).

12. Marineantrieb umfassend eine Antriebswelle (40) und eine Marine-Gleitringdichtungsanordnung nach einem der vorgehenden Ansprüche, wobei die Marine-Gleitringdichtungsanordnung (1) einen Raum (44) für ein Schmiermedium von einer Umgebung (45) abdichtet.

## Claims

1. A marine mechanical seal arrangement, comprising:
a first mechanical seal (2) comprising a first rotating slide ring (21) and a first stationary slide ring (22), which define a first sealing gap (23) between their two sliding surfaces (21a, 22a),
a second mechanical seal (3) comprising a second rotating slide ring (31) and a second stationary slide ring (32), which define a second sealing gap (33) between their sliding surfaces (31a, 32a), **characterized by**
a barrier circuit (10) comprising a barrier fluid cavity (8), which is arranged between the first mechanical seal (2) and the second mechanical seal (3) and is filled with a barrier fluid,
wherein the barrier fluid cavity (8) is divided into a first sub-cavity (81) and a second sub-cavity (82),
wherein the first sub-cavity (81) and the second sub-cavity (82) are separated by a flexible lip seal (7),
wherein the second sub-cavity (82) is arranged at the second mechanical seal (3), and
wherein the lip seal (7) is arranged, so that a flow of barrier fluid from the first sub-cavity (81) into the second sub-cavity (82) is allowed and a flow of barrier fluid from the second sub-cavity to the first sub-cavity is prevented.

2. The marine mechanical seal arrangement according to claim 1, wherein the first mechanical seal (2) comprises a first slide ring carrier (4), which is axially pretensioned via a first pretensioning device (24) and which is arranged to be axially movable in the axial direction (X-X).

3. The marine mechanical seal arrangement according to claim 2, wherein the first slide ring carrier (4) holds the first rotating slide ring (21).

4. The marine mechanical seal arrangement according to any of the preceding claims, wherein the second mechanical seal (3) comprises a second slide ring carrier (5), which is axially pretensioned via a second pretensioning device (34) and which is arranged axially movably in the axial direction (X-X).

5. The marine mechanical seal arrangement according to claim 4, wherein the second slide ring carrier (5) holds the second stationary slide ring (32).

6. The marine mechanical seal arrangement according to any of the preceding claims, further comprising a third slide ring carrier (6), which holds the second rotating slide ring (32) of the second mechanical seal (3), wherein the lip seal (7) seals at the third slide ring carrier (6).

7. The marine mechanical seal arrangement according to claim 6, wherein the third slide ring carrier (6) comprises a surface facing radially outwards (60), at which the lip seal (7) seals.

8. The marine mechanical seal arrangement according to any of the preceding claims, wherein a first auxiliary sealing element (25) is arranged at the first slide ring carrier (4), wherein a first axial deformation cavity (26) is provided directly adjacent to the first auxiliary sealing element (25).

9. The marine mechanical seal arrangement according to any of the preceding claims, wherein a second auxiliary sealing element (35) is arranged at the second slide ring carrier (5), wherein a second axial deformation cavity (36) is provided directly adjacent to the second auxiliary sealing element (35).

10. The marine mechanical seal arrangement according to any of the preceding claims, wherein the barrier fluid (10) circuit comprises a barrier fluid reservoir (11) and a pump (14), wherein the second sub-cavity (82) is connected to the barrier fluid reservoir (11) via a return line (13), to return barrier fluid from the second sub-cavity (82) to the barrier fluid reservoir (11), and wherein the barrier fluid reservoir (11) is connected to the first sub-cavity (81) via a supply line (12) to supply barrier fluid from the barrier fluid reservoir (11) to the first sub-cavity (81).

11. The marine mechanical seal arrangement according to claim 10, further comprising an oil separator (15) and/or a water separator (16).

12. A marine propulsion comprising a drive shaft (40) and a marine mechanical seal arrangement (1) according to any of the preceding claims, wherein the marine mechanical seal arrangement (1) seals a cavity (44) for a lubricating medium from an environment (45).

## Revendications

1. Ensemble marin de joints d'étanchéité à bagues de glissement, comprenant :
- un premier joint d'étanchéité à bagues de glissement (2) avec une première bague de glissement rotative (21) et une première bague de glissement fixe (22), lesquelles définissent une première fente d'étanchéité (23) entre leurs deux surfaces de glissement (21a, 22a),
- un deuxième joint d'étanchéité à bagues de glissement (3) avec une deuxième bague de glissement rotative (31) et une deuxième bague de glissement fixe (32), lesquelles définissent une deuxième fente d'étanchéité (33) entre leurs surfaces de glissement (31a, 32a), **caractérisé par**
- un circuit de blocage (10) avec un espace de fluide de blocage (8), lequel est disposé entre le premier joint d'étanchéité à bagues de glissement (2) et le deuxième joint d'étanchéité à bagues de glissement (3) et est rempli d'un fluide de blocage,
- dans lequel l'espace de fluide de blocage (8) est subdivisé en un premier sous-espace (81) et un deuxième sous-espace (82),
- dans lequel le premier sous-espace (81) et le deuxième sous-espace (82) sont séparés par un joint à lèvres (7) flexible,
- dans lequel le deuxième sous-espace (82) est disposé sur le deuxième joint d'étanchéité à bagues de glissement (3), et
- dans lequel le joint à lèvres (7) est disposé de telle sorte qu'un écoulement de fluide de blocage à partir du premier sous-espace (81) dans le deuxième sous-espace (82) est possible et un écoulement de fluide de blocage à partir du deuxième sous-espace vers le premier sous-espace est empêché.

2. Ensemble marin de joints d'étanchéité à bagues de glissement selon la revendication 1, dans lequel le premier joint d'étanchéité à bagues de glissement (2) présente un premier support de bagues de glissement (4), lequel est précontraint axialement au moyen d'un premier dispositif de précontrainte (24) et lequel est disposé de manière mobile axialement dans la direction axiale (X-X).

3. Ensemble marin de joints d'étanchéité à bagues de glissement selon la revendication 2, dans lequel le premier support de bagues de glissement (4) porte la première bague de glissement rotative (21).

4. Ensemble marin de joints d'étanchéité à bagues de glissement selon l'une quelconque des revendications précédentes, dans lequel le deuxième joint d'étanchéité à bagues de glissement (3) présente un deuxième support de bagues de glissement (5), lequel est précontraint axialement au moyen d'un deuxième dispositif de précontrainte (34) et lequel est disposé de manière mobile axialement dans la direction axiale (X-X).

5. Ensemble marin de joints d'étanchéité à bagues de glissement selon la revendication 4, dans lequel le deuxième support de bagues de glissement (5) porte la deuxième bague de glissement fixe (32).

6. Ensemble marin de joints d'étanchéité à bagues de glissement selon l'une quelconque des revendications précédentes, comprenant en outre un troisième support de bagues de glissement (6), lequel porte la deuxième bague de glissement rotative (32) du deuxième joint d'étanchéité à bagues de glissement (3), dans lequel le joint à lèvres (7) assure une étanchéité sur le troisième support de bagues de glissement (6).

7. Ensemble marin de joints d'étanchéité à bagues de glissement selon la revendication 6, dans lequel le troisième support de bagues de glissement (6) présente une surface (60) dirigée radialement vers l'extérieur, sur laquelle le joint à lèvres (7) assure une étanchéité.

8. Ensemble marin de joints d'étanchéité à bagues de glissement selon l'une quelconque des revendications précédentes, dans lequel un premier élément d'étanchéité secondaire (25) est disposé sur le premier support de bagues de glissement (4), dans lequel un premier espace de déformation axial (26) est prévu directement au voisinage du premier élément d'étanchéité secondaire (25).

9. Ensemble marin de joints d'étanchéité à bagues de glissement selon l'une quelconque des revendications précédentes, dans lequel un deuxième élément d'étanchéité secondaire (35) est disposé sur le deuxième support de bagues de glissement (5), dans lequel un deuxième espace de déformation axial (36) est prévu directement au voisinage du deuxième élément d'étanchéité secondaire (35).

10. Ensemble marin de joints d'étanchéité à bagues de glissement selon l'une quelconque des revendications précédentes, dans lequel le circuit de blocage (10) présente un réservoir de fluide de blocage (11) et une pompe (14), dans lequel le deuxième sous-espace (82) est relié au réservoir de fluide de blocage (11) par l'intermédiaire d'une conduite de retour (13), afin de ramener le fluide de blocage à partir du deuxième sous-espace (82) vers le réservoir de fluide de blocage, et dans lequel le réservoir de fluide de blocage (11) est relié au premier sous-espace (81) par l'intermédiaire d'une conduite d'amenée (12), afin d'amener le fluide de blocage à partir du réservoir de fluide de blocage (11) vers le premier sous-espace (81).

11. Ensemble marin de joints d'étanchéité à bagues de glissement selon la revendication 10, comprenant en outre un séparateur d'huile (15) et/ou un séparateur d'eau (16).

12. Entraînement marin comprenant un arbre d'entraînement (40) et un ensemble marin de joints d'étanchéité à bagues de glissement (1) selon l'une quelconque des revendications précédentes, dans lequel l'ensemble marin de joints d'étanchéité à bagues de glissement (1) étanchéifie un espace (44) pour un lubrifiant par rapport à un environnement (45).
